# EUROPEAN PATENT APPLICATION

(11) **EP 4 815 524 A1**
(43) Date of publication of application: **30.09.2026**
(21) Application number: 25166510.5
(22) Date of filing: 27.03.2025
(51) Int. Cl.: H04W 4/90, H04W 76/50, H04W 4/021, H04W 4/40, H04W 4/44

(54) **METHOD FOR CONDUCTING AN EMERGENCY COMMUNICATION AND/OR FOR CONFIGURING AN EMERGENCY COMMUNICATION, IN-VEHICLE SYSTEM, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: LAUSTER, Reinhard, 3100 St. Pölten (AT); BÜCHTER, Martin, 53840 Troisdorf (DE)
(74) Representative: Schwöbel, Thilo K.

(57) **Abstract**

The invention relates to a method for conducting an emergency communication and/or for configuring an emergency communication, the emergency communication using an in-vehicle system in a country, or a geographic region within a country, that is part of the coverage area of a mobile communication network,
wherein the in-vehicle system comprises a terminal equipment entity or functionality as well as a mobile termination entity or functionality, wherein, regarding conducting and/or configuring emergency communication, at least one piece of emergency communication information (or at least one emergency communication-related parameter) is stored in the in-vehicle system and/or at least one action is requested, by the terminal equipment entity or functionality, from the mobile termination entity or functionality,
wherein the method comprises the following steps:
-- in a first step, the terminal equipment entity or functionality requests the at least one piece of emergency communication information (or the at least one emergency communication-related parameter) and/or requests at least one action by means of an emergency communication request,
-- in a second step, the terminal equipment entity or functionality receives the at least one piece of emergency communication information (or the at least one emergency communication-related parameter) and/or the mobile termination entity or functionality conducts the at least one requested action.

## Description

### BACKGROUND

The present invention relates to a method for conducting an emergency communication and/or for configuring an emergency communication, the emergency communication using an in-vehicle system in a country, or a geographic region within a country, that is part of the coverage area of a mobile communication network.

Furthermore, the present invention relates to an in-vehicle system for conducting an emergency communication and/or for configuring an emergency communication, the emergency communication using an in-vehicle system in a country, or a geographic region within a country, that is part of the coverage area of a mobile communication network.

Additionally, the present invention relates to a system or a mobile communication network for conducting an emergency communication and/or for configuring an emergency communication, the emergency communication using an in-vehicle system in a country, or a geographic region within a country, that is part of the coverage area of a mobile communication network.

Furthermore, the present invention relates to a program and to a computer-readable medium for conducting an emergency communication and/or for configuring an emergency communication according to the inventive method.

Emergency communications, or emergency calls, are an established tool to provide help in case of emergencies.

However, in currently known implementations, the integration of new features and/or the realization of flexible solutions typically requires substantial efforts and/or is time-consuming, especially implementations that are flexible to implement in an adaptable manner (especially based on the same technical infrastructure and/or based on the same components in a manner such that the same components (or components having the same configuration) are able to be used, i.e. using identical parts in order to realize an increased number of pieces), e.g. in a manner such that implementations are able to differ between different geographical regions.

### SUMMARY

An object of the present invention is to provide a technically simple, effective and cost effective solution for conducting an emergency communication and/or for configuring an emergency communication in a flexible manner. A further object of the present invention is to provide a corresponding in-vehicle system, a corresponding system or mobile communication network, and a corresponding program and computer-readable medium.

The object of the present invention is achieved by a method for conducting an emergency communication and/or for configuring an emergency communication, the emergency communication using an in-vehicle system in a country, or a geographic region within a country, that is part of the coverage area of a mobile communication network,
wherein the in-vehicle system comprises a terminal equipment entity or functionality as well as a mobile termination entity or functionality, wherein, regarding conducting and/or configuring emergency communication, at least one piece of emergency communication information (or at least one emergency communication-related parameter) is stored in the in-vehicle system and/or at least one action is requested, by the terminal equipment entity or functionality, from the mobile termination entity or functionality,
wherein the method comprises the following steps:
   -- in a first step, the terminal equipment entity or functionality requests the at least one piece of emergency communication information (or at least one emergency communication-related parameter) and/or requests at least one action by means of an emergency communication request,
   -- in a second step, the terminal equipment entity or functionality receives the at least one piece of emergency communication information (or the at least one emergency communication-related parameter) and/or the mobile termination entity or functionality conducts the at least one requested action.

It is thereby advantageously possible, according to the present invention, to use AT-commands (or application programming interface messages or commands) for conducting emergency communication, especially eCalls, and especially for configuring emergency communication in an (or by an) in-vehicle system (IVS) - such as eCalls, test eCalls, but also calls to, e.g., service centers that are not (or might not be), technically speaking, emergency calls in the strict sense but are nevertheless initiated by the in-vehicle system that is used, typically in a vehicle, for emergency communication -, wherein such emergency communication, or its configuration, involves managing communication between the vehicle's telematics system and emergency services, ensuring secure, robust and reliable transmission of critical data. Integrating AT-commands (or application programming interface functionality) into the eCall system for in-vehicle systems (IVS) provides several benefits over relying solely on the traditional protocol-based eCall specifications.

Especially, according to the present invention and by means of integrating, or using, AT-commands and/or application programming interface functionality, it is advantageously possible to realize a higher level of scalability and interoperability with the components of the in-vehicle system, especially with the universal integrated circuit card or functionality (UICC - hereinafter also called USIM). It is to be understood that - in the context of the present invention - an embedded subscriber identity module (eSIM) is, alternatively, likewise meant (and is synonymously used) to the terms universal integrated circuit card or functionality or USIM (card).

By means of using these AT-commands (or application programming interface functionality) it is advantageously possible to provide a flexible solution that allows for updates and the integration of new features, standards, or technologies without necessitating a complete system overhaul. This is particularly important given current challenges, such as the phase-out of 2G technology, which affects legacy fleet vehicles. Additionally, this especially enables a flexible implementation in a manner such that different configurations might apply to different (geographical) regions and where, depending on respective (potentially different) regulation, a different behavior results in a specific profile in regions (as it is required there) - e.g. a different behavior, and thus different configurations, of in-vehicle systems used in Europe (e.g. the EU), the USA and/or China.

It is furthermore advantageously possible according to the present invention that AT-commands (or application programming interface functionality) are used to facilitate the incorporation of advanced functionalities like satellite fallback, mesh networking, and predictive analytics. The use of AT-commands and/or of application programming interface functionality also facilitates the management of connections across various network types and technologies, thereby enhancing the system's ability to operate on a global scale and across different network standards. Especially, this flexibility allows an improved system resilience and scalability as well as specific eCall system implementations to be more easily integrated with other digital ecosystems; furthermore, it is advantageously possible, according to the present invention, to more easily and/or more flexibly conduct emergency communication test calls such as test eCalls.

Hence, according to the present invention, it is advantageously possible to enhance the capabilities and/or the configurability of in-vehicle systems beyond the traditional eCall specifications, thereby improving system resilience and scalability. Especially according to the present invention, the following enhancements and/or functions are proposed:
-- a new function to cover the specific behavior of regional regulatory requirements - for example, requirements defined for profiling in-vehicle systems for the European (or EU) market;
-- a new function that the in-vehicle system shall remain registered (if not in limitedservice state) and shall wait for a potential PSAP (public safety answering point) callback for a specific time);
-- a new function that the in-vehicle system shall continue the NG (next generation) eCall but shall not resend the minimum set of data if the in-vehicle system receives a SIP 200 OK response containing a negative minimum set of data acknowledgement message (MSD ACK);
-- a new function for support of MSD reception by a PSAP using in-band modem over packet switched networks; requirements that the IVS shall set up an IMS emergency voice call (without MSD transfer and without use of eCall URNs) if no eCall supported cell is available;
-- a new function that the IVS shall continue the NG eCall as a normal IMS emergency voice call but shall not resend the MSD if eCall support of cell changed during call;
-- a new function that the IVS shall try to reattempt the NG eCall for a period of up to 2 minutes if 1st attempt fails;
-- a new function that the IVS shall try to reattempt the NG eCall for a period of up to 2 minutes, if eCall drops after successful eCall establishment.

According to the present invention, the related and required parameters can be stored on the universal integrated circuit card or functionality or USIM by operator or car manufacturer respectively the in-vehicle system manufacturer. By means of AT-commands, The in-vehicle system application can query these parameters and use them for eCall establishment.

The proposed new procedures give the flexibility to provide and update eCall profiles by eligible authorities eg. NRAs or PSAP for eCall and test-eCall depending on regulatory requirements for regional markets.

Especially, the present invention proposes to enable these requirements by new commands of the AT interface, but implementation can be also applied by a new API-based interface (optional with a combination/addition to AT commands) between the in-vehicle system application and the modem.

Especially according to the present invention, an in-vehicle system (i.e. a user equipment) is used for conducting and/or for configuring an emergency communication. Such an emergency communication is typically happening in a (specific) country, or in a (specific) geographic region within a country (typically being part of the coverage area of a mobile communication network which mobile communication network might also be a non-terrestrial (mobile communication) network, i.e. based, e.g., on the use of satellites and/or of high-altitude platforms instead (or in combination with) terrestrial base stations or terrestrial infrastructure).

According to the present invention, the in-vehicle system comprises a terminal equipment entity or functionality ("TE" - terminal equipment, especially a computer that might be similar or equal to a "DTE", a data terminal equipment, or, in case of an eCall, the in-vehicle system device it would be the actual application executed in the device) as well as a mobile termination entity or functionality ("MT" - mobile termination).

Regarding conducting and/or configuring the (or an) emergency communication according to the present invention, especially two main embodiments apply: According to a first embodiment (or group of embodiments) at least one piece of emergency communication information (or at least one emergency communication-related parameter) is stored in the in-vehicle system - especially in the universal integrated circuit card or functionality (or USIM (card)) of the in-vehicle system. According to a second embodiment (or group of embodiments) according to the present invention, the (or an) emergency communication is conducted and/or configured according to the present invention by means of at least one action being requested, by the terminal equipment entity or functionality, from the mobile termination entity or functionality. Of course, both embodiments or groups of embodiments are able to be combined or cumulatively realized, i.e. regarding conducting and/or configuring the (or an) emergency communication according to the present invention, at least one piece of emergency communication information (or at least one emergency communication-related parameter) is stored in the in-vehicle system and/or at least one action is requested, by the terminal equipment entity or functionality, from the mobile termination entity or functionality.

According to the present invention, the inventive method comprises at least the steps of:
-- (according to the first embodiment or group of embodiments) the terminal equipment entity or functionality requesting the at least one piece of emergency communication information (or the at least one emergency communication-related parameter) and/or (according to the second embodiment or group of embodiments) the terminal equipment entity or functionality requesting at least one action by means of an emergency communication request,
-- (according to the first embodiment or group of embodiments) the terminal equipment entity or functionality receives the at least one piece of emergency communication information (or the at least one emergency communication-related parameter) and/or (according to the second embodiment or group of embodiments) the mobile termination entity or functionality conducts the at least one requested action.

According to the present invention (both the first and second embodiment or groups thereof), it is advantageously possible and preferred that the in-vehicle system comprises, besides the terminal equipment entity or functionality and the mobile termination entity or functionality, a terminal adaptor entity or functionality, wherein the terminal adaptor entity or functionality receives, during or after the first step, the emergency communication request. Especially (and especially according to the first embodiment or group of embodiments), the terminal adaptor entity or functionality transmits, during or prior to the second step, an emergency communication response to the terminal equipment entity or functionality.

It is thereby advantageously possible that - according to the present invention - no modifications (especially no hardware modifications) are required in order to implement neither the first nor the second embodiment of the present invention or groups thereof, but that a standard in-vehicle system hardware is able to be used that typically comprises, besides the terminal equipment entity or functionality and the mobile termination entity or functionality, the terminal adaptor entity or functionality.

According to the present invention - especially according to the first embodiment or groups thereof -, it is advantageously furthermore possible and preferred that the mobile termination entity or functionality comprises or is connected to or accesses at least one universal integrated circuit card or functionality (or USIM, eSIM, etc), wherein the at least one piece of emergency communication information (or at least one emergency communication-related parameter) is stored in (or on) the universal integrated circuit card or functionality (or in a USIM or an embedded universal integrated circuit card or functionality) of or associated to the in-vehicle system, wherein at least one piece of emergency communication information (or the at least one emergency communication-related parameter) is requested by the emergency communication request, wherein the emergency communication request especially corresponds to at least one functionality out of the following:
-- querying one emergency communication-related parameter or a plurality of emergency communication-related parameters stored on the universal integrated circuit card or functionality,
-- triggering an emergency communication, especially an eCall, using emergency setup with category information, such as a MSISDN, one sos-uniform resource name, sos-URN, or a plurality of sos-uniform resource names, sos-URNs, or Tel-URNs as the emergency communication-related parameter(s) provisioned by or stored on the universal integrated circuit card or functionality,
-- retrying an emergency communication, especially an eCall, based on or depending on timers and/or the preferred domain selection as the emergency communication-related parameter(s) provisioned by or stored on the universal integrated circuit card or functionality,
-- triggering a test emergency communication, especially a test eCall, using one uniform resource name, URN, or a plurality of uniform resource names, URNs, as the emergency communication-related parameter(s) provisioned by or stored on the universal integrated circuit card or functionality,
-- retrying a test emergency communication, especially a test eCall, based on or depending on timers and/or preferred domain selection as the emergency communication-related parameter(s) provisioned by or stored on the universal integrated circuit card or functionality,
-- initiating a fallback emergency communication, especially a fallback eCall, using one uniform resource name, URN, or a plurality of uniform resource names, URNs, as the emergency communication-related parameter(s) provisioned by or stored on the universal integrated circuit card or functionality, wherein the uniform resource name, URN, corresponds to a service center or to a private eCall number, to a private call center, to a test center or to a public safety answering point (PSAP),
   wherein especially the fallback emergency communication uses emergency call setup with category information, one sos-uniform resource name, sos-URN, or a plurality of sos-uniform resource names or category information, corresponds to a service center, a private call center, a test center or to an public safety answering point (PSAP);
-- selecting either inband transfer of minimum set of data-information or outband (or out-of-band) signaling (e.g. SIP signaling used by the IP multimedia subsystem (IMS).

It is thereby advantageously possible according to the present invention to comparatively easily implement and realize the advantages of the present invention, and this for different use cases and situations.

According to the present invention - especially according to both the first and/or the second embodiment or groups thereof -, it is advantageously furthermore possible and preferred that the universal integrated circuit card or functionality comprises - regarding at least one of the functionalities being associated or triggered or caused by the emergency communication request - an information, especially a one-bit-information, indicating that the respective functionality is enabled or disabled, or that the respective functionality is allowed or disallowed.

It is thereby advantageously possible according to the present invention to comparatively easily implement and realize the present invention.

According to the present invention - especially according to the first embodiment or groups thereof -, it is furthermore advantageously possible and preferred that the at least one action is requested, in the first step, by the terminal equipment entity or functionality and by means of the emergency communication request, wherein the emergency communication request corresponds to reporting back an information regarding the success and/or the failure of minimum set of data-information transmission.

It is thereby advantageously possible according to the present invention to use AT-commands and or application programming interface messages to comparatively easily modify the behavior of the considered in-vehicle system.

Furthermore, it is advantageously possible and preferred according to the present invention that the terminal adaptor entity or functionality, transmits, during or after the first step, a further request of the emergency communication-related parameter(s) to the mobile termination entity or functionality, and wherein the terminal adaptor entity or functionality receives, during or prior to the second step, the emergency communication-related parameter(s) from the mobile termination entity or functionality.

Furthermore, it is advantageously possible and preferred according to the present invention that an AT-command interface and/or an application programming interface is used between, on the one hand, the terminal equipment entity or functionality, and, on the other hand, the terminal adaptor entity or functionality or the mobile termination entity or functionality.

Furthermore, it is advantageously possible and preferred according to the present invention that the universal integrated circuit card or functionality is realized as a subscriber identity module, especially comprising a secure element or part of the user equipment.

It is thereby advantageously possible according to the present invention to comparatively easily implement and realize the present invention.

Furthermore, the present invention relates to an in-vehicle system for conducting an emergency communication and/or for configuring an emergency communication, the emergency communication using an in-vehicle system in a country, or a geographic region within a country, that is part of the coverage area of a mobile communication network,
wherein the in-vehicle system comprises a terminal equipment entity or functionality as well as a mobile termination entity or functionality, wherein, regarding conducting and/or configuring emergency communication, at least one piece of emergency communication information (or at least one emergency communication-related parameter) is stored in the in-vehicle system and/or at least one action is requested, by the terminal equipment entity or functionality, from the mobile termination entity or functionality,
wherein the in-vehicle system is configured such that:
   -- the terminal equipment entity or functionality requests the at least one piece of emergency communication information (or the at least one emergency communication-related parameter) and/or requests at least one action by means of an emergency communication request,
   -- the terminal equipment entity or functionality receives the at least one piece of emergency communication information (or the at least one emergency communication-related parameter) and/or the mobile termination entity or functionality conducts the at least one requested action.

Furthermore, the present invention relates to a system or to a mobile communication network for conducting an emergency communication and/or for configuring an emergency communication, the emergency communication using an in-vehicle system in a country, or a geographic region within a country, that is part of the coverage area of a mobile communication network,
wherein the in-vehicle system comprises a terminal equipment entity or functionality as well as a mobile termination entity or functionality, wherein, regarding conducting and/or configuring emergency communication, at least one piece of emergency communication information (or at least one emergency communication-related parameter) is stored in the in-vehicle system and/or at least one action is requested, by the terminal equipment entity or functionality, from the mobile termination entity or functionality,
wherein the system or mobile communication network is configured such that:
   -- the terminal equipment entity or functionality requests the at least one piece of emergency communication information (or the at least one emergency communication-related parameter) and/or requests at least one action by means of an emergency communication request,
   -- the terminal equipment entity or functionality receives the at least one piece of emergency communication information (or the at least one emergency communication-related parameter) and/or the mobile termination entity or functionality conducts the at least one requested action.

Additionally, the present invention relates to a program comprising a computer readable program code which, when executed on a computer and/or on a in-vehicle system and/or on a network node of a mobile communication network, or in part on a in-vehicle system and/or in part on network node of a mobile communication network, causes the computer and/or the in-vehicle system and/or the network node of the mobile communication network to perform the inventive method.

Still additionally, the present invention relates to a computer-readable medium comprising instructions which when executed on a computer and/or on a in-vehicle system and/or on a network node of a mobile communication network, or in part on a in-vehicle system and/or in part on network node of a mobile communication network, causes the computer and/or the in-vehicle system and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a user equipment in a radio environment comprising a plurality of radio cells of a plurality of mobile communication networks.
Figure 2 schematically illustrates a user equipment and its components in greater detail.
Figure 3 schematically illustrates an example of a communication between different parts within a user equipment in case of using an universal integrated circuit card or functionality as part of the user equipment.
Figure 4 schematically shows a message flow between the application (or the user), the terminal equipment entity or functionality, the terminal adaptor entity or functionality, the mobile termination entity or functionality and the universal integrated circuit card or functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

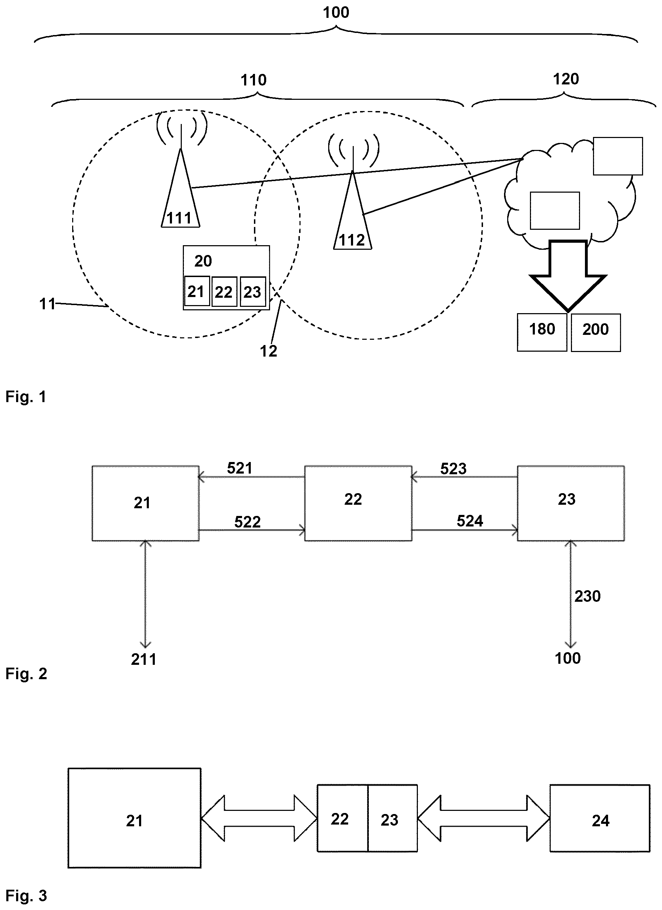

In Figure 1, a telecommunications network 100, especially a mobile communication network 100, is schematically shown. The mobile communication network 100 comprises an access network 110 and a core network 120, and an in-vehicle system 20 is connected to the mobile communication network 100 via the access network 110. The mobile communication network 100 is especially realized as a mobile (cellular) communication network 100, and the access network 110 of the mobile communication network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the in-vehicle system 20 - if connected to or with the mobile communication network 100 - is connected, via a radio interface or air interface, to the first base station entity 111 of the access network 110 of the mobile communication network 100.
In case of an emergency situation, a call is initiated, by the in-vehicle system 20, to an instance such as a service provider 200 or a public safety answering point 180. Optionally, it might be the case that an emergency communication is initiated, from the service provider 200 and in dependency of the location of the in-vehicle system 20, to the specific public safety answering point 180.

In Figure 1, the in-vehicle system 20 (or also called user equipment 20) is schematically shown as comprising different components: According to the present invention, the in-vehicle system 20 comprises a terminal equipment entity or functionality 21 as well as a mobile termination entity or functionality 23. In the exemplary embodiment shown in Figure 1, the user equipment 20 additionally comprises a terminal adaptor entity or functionality 22.

Figure 2 shows the in-vehicle system 20 and its components in greater detail, namely the terminal equipment entity or functionality 21, and the mobile termination entity or functionality 23. Again, in the exemplary embodiment shown in Figure 2, the user equipment 20 additionally comprises the terminal adaptor entity or functionality 22.
More generally according to the present invention, the terminal equipment entity or functionality 21 is able to request, by means of a first request 522, a first requested information 521. According to the exemplary embodiment represented in Figure 2, the terminal equipment entity or functionality 21 transmits the first request 522 to the terminal adaptor entity or functionality 22, and receives the first requested information 521 from the terminal adaptor entity or functionality 22. Furthermore in the exemplary embodiment shown in Figure 2, the terminal adaptor entity or functionality 22 is able to request, by means of a second request 524 and especially to the mobile termination entity or functionality 23, a second requested information 523.
Between the mobile termination entity or functionality 23 (of the in-vehicle system 20) and the network 100 (exemplarily, in Figure 2, the mobile communication network 100 is considered to be the HPLMN of the in-vehicle system 20), a number of network messages 230 are typically exchanged.
According to the present invention, the terminal adaptor entity or functionality 22, or "TA" - Terminal Adaptor, is especially a phone data card supporting 2G, 3G, 4G, 5G and/or 6G (equal to a DCE; data circuit terminating equipment), and/or the terminal equipment entity or functionality 21, or "TE" - Terminal Equipment, is especially a computer (equal to DTE; data terminal equipment), or, in case of an eCall, the in-vehicle system device it would be the actual application executed in the device.

According to the present invention, it is advantageously possible and preferred, that the first request 522 (or the corresponding message, i.e. a first request message 522) corresponds to an emergency communication request 522 in the form of AT-commands. Hence, between on the one hand the terminal equipment entity or functionality 21, and on the other hand the terminal adaptor entity or functionality 22 or the mobile termination entity or functionality 23, an AT-command interface is realized.
Alternatively (or cumulatively to realizing such an AT-command interface), it is advantageously possible and preferred, that the first request 522 (or the corresponding message, i.e. a first request message 522) corresponds to an emergency communication request 522 in the form of an application programming interface request. Hence, between on the one hand the terminal equipment entity or functionality 21, and on the other hand the terminal adaptor entity or functionality 22 or the mobile termination entity or functionality 23, an application programming interface is realized.
The first requested information 521 (or, the corresponding message, especially comprising this information) corresponds to the respective response or responses of the first request message 522.
The second request 524 (or second request message 524) corresponds to mobile termination control commands (typically according to a proprietary interface of the manufacturer of the terminal adaptor entity or functionality 22 and/or of the mobile termination entity or functionality 23); the second requested information 523 (conveying or comprising the first requested information 521) especially corresponds to a mobile termination status message.
Hence especially, an AT-command interface or an application programming interface (or, more generally, a terminal equipment-terminal adaptor interface) is used between, on the one hand, the terminal equipment entity or functionality 21, and, on the other hand, the terminal adaptor entity or functionality 22 or the mobile termination entity or functionality 23, thereby allowing an application (or an application-level entity or functionality of the terminal equipment entity or functionality 21, i.e. of the in-vehicle system 20) to become aware of the at least one piece of emergency communication information (or the at least one emergency communication-related parameter). Alternatively or cumulatively thereto (i.e. to become aware of the at least one piece of emergency communication information or the at least one emergency communication-related parameter), the application (or an application-level entity or functionality of the terminal equipment entity or functionality 21, i.e. of the in-vehicle system 20) the terminal equipment entity or functionality 21 is able to request (by means of the first request message 522, and again using a AT-command or an application programming interface) at least one action from the mobile termination entity or functionality 23.

It is preferred according to the present invention that the AT-command interface (and/or the application programming interface) is realized either between the terminal equipment entity or functionality 21 and the terminal adaptor entity or functionality 22, or between the terminal equipment entity or functionality 21 and the mobile termination entity or functionality 23.
Especially when an AT-command interface (or application programming interface) is used, a command towards the mobile termination entity or functionality is comparatively easily able to be generated, based on the terminal equipment entity or functionality's knowledge of the at least one piece of emergency communication information (or the at least one emergency communication-related parameter), e.g. by settings of the in-vehicle system application. In the exemplary embodiment shown in Figure 2, the terminal adaptor entity or functionality 22 receives the first request (message) 522 from the terminal equipment entity or functionality 21 (especially triggered by a user interaction and/or an event of an application 211 of the terminal equipment entity or functionality 21), and the terminal adaptor entity or functionality 22 transmits the requested information 521 to the terminal equipment entity or functionality 21.

According to the present invention, it is especially advantageous and preferred that, as on option, interactions with a SIM card (i.e. a subscriber identity module card - which term is used synonymously with the term universal integrated circuit card or functionality (UICC)) can be used to store/query parameters and the required architecture can be described as represented in Figure 3.
Thus, Figure 3 schematically represents an example of a communication within the in-vehicle system 20 in case of using a universal integrated circuit card or functionality 24 as part of the in-vehicle system 20; i.e. Figure 3 shows the communication between the terminal equipment entity or functionality 21, the terminal adaptor entity or functionality 22, the mobile termination entity or functionality 23, and the universal integrated circuit card or functionality 24. A double arrow between the terminal equipment entity or functionality 21 and the terminal adaptor entity or functionality 22 schematically and exemplarily either indicates the AT-command interface or the application programming interface, and another double arrow between the mobile termination entity or functionality 23 and the universal integrated circuit card or functionality 24 schematically and exemplarily indicates the mobile termination entity or functionality - universal integrated circuit card or functionality interface.

In order to allow an application (i.e. the terminal equipment entity or functionality 21) to request at least one action and/or to query an emergency communication information (or an emergency communication-related parameter) - which emergency communication information (or which emergency communication-related parameter) being especially (but not necessarily) stored on the subscriber identity module or subscriber identity module (SIM) card or universal integrated circuit card or functionality 24 and/or especially being remotely maintained by, e.g., the home operator on the subscriber identity module or sim card (or universal integrated circuit card or functionality) -, a respective command set for the "AT(-command) interface" (or application programming interface) and/or for the "MT-UICC" interface and respective procedures needs to be defined. Hence, e.g., in order to allow an application (i.e. the terminal equipment entity or functionality 21) to trigger/store/query, for example, eCall parameters from the mobile termination entity or functionality 23 or from the universal integrated circuit card or functionality 24 (e.g. URNs, MSD mode, retry, fallback) only a command set for the "AT interface" as well as for the "MT-UICC" interface and respective procedures needs to be defined.

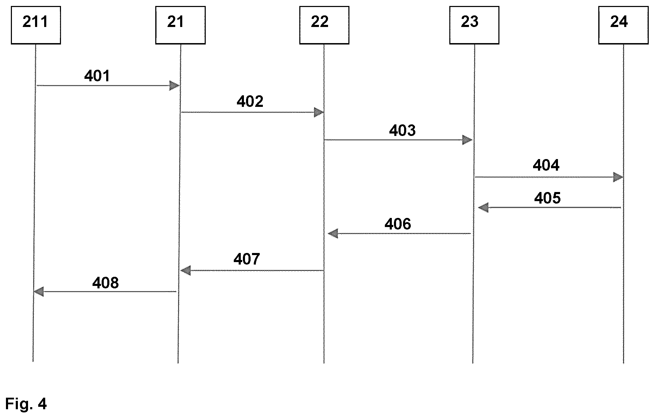

Figure 4 schematically and exemplarily shows a message flow between the application (or the user) 211, the terminal equipment entity or functionality 21, the terminal adaptor entity or functionality 22, the mobile termination entity or functionality 23 and the universal integrated circuit card or functionality 24 for the example of the terminal equipment entity or functionality 21 - regarding conducting and/or configuring emergency communication - requesting at least one piece of emergency communication information (or at least one emergency communication-related parameter) by means of an emergency communication request 522.
In view thereof, it is supposed that the at least one piece of emergency communication information (or the at least one emergency communication-related parameter) is stored somewhere in the in-vehicle system - especially (but not necessarily) in the universal integrated circuit card or functionality 24 (or subscriber identity module card).
In a first processing step 401, the user or the application 211 triggers a query (towards the terminal equipment entity or functionality 21) in order to obtain the at least one piece of emergency communication information or the at least one emergency communication-related parameter (e.g. done via interaction with a terminal equipment based on application programming interface and/or a software library) - e.g. the in-vehicle system application 211 triggers to setup an eCall or test eCall (or issues AT-commands and/or queries the emergency communication information or the emergency communication-related parameter in the form of universal integrated circuit card or functionality UICC parameters.
In a second processing step 402, the terminal equipment entity or functionality 21, issues (towards the terminal adaptor entity or functionality 22) by means of the emergency communication request 522 - e.g. the terminal equipment entity or functionality 21 issues the AT-command set over the AT command line interface (serial interface).
Thus, the emergency communication request 522 especially corresponds to an AT-command (or to an AT-command set) over the AT command line interface; alternatively (or cumulatively), the emergency communication request 522 especially corresponds to an application programming interface message. The second processing step 402 corresponds (regarding requesting at least one emergency communication information or at least one emergency communication-related parameter) to the first step according to the inventive method, i.e. the terminal equipment entity or functionality 21 requesting, by means of an emergency communication request 522, the at least one piece of emergency communication information or the at least one emergency communication-related parameter.
In a third processing step 403, the terminal adaptor entity or functionality 22 forwards the request to the mobile termination entity or functionality 23.
In a fourth processing step 404, the mobile termination entity or functionality 23 queries the universal integrated circuit card or functionality 24 for the emergency communication information or emergency communication-related parameter (alternatively, the mobile termination entity or functionality 23 directly executes the session/call setup procedures. In a fifth processing step 405, the universal integrated circuit card or functionality 24 responds with the requested at least one piece of emergency communication information or emergency communication-related parameter (stored on the universal integrated circuit card or functionality) - e.g. a stored eCall related parameter -, i.e. provides the emergency communication information 521 or emergency communication-related parameter (i.e. the first requested information 521) first to the mobile termination entity or functionality 23, and in a sixth processing step 406, the mobile termination entity or functionality 23 forwards the result, i.e. the emergency communication information 521 or emergency communication-related parameter (or first requested information 521), to the terminal adaptor entity or functionality 22 - e.g. the mobile termination entity or functionality 23 forwards the result of the session/call setup and reports back successful/unsuccessful session/call establishment and MSD data delivery to the terminal adaptor entity or functionality 22.
In a seventh processing step 407, the terminal adaptor entity or functionality 22 forwards the result, i.e. the emergency communication information (emergency communication-related parameter) 521, to the terminal equipment entity or functionality 21 (i.e. the terminal equipment entity or functionality 21 receives the emergency communication information (emergency communication-related parameter) 521), especially in the form of an AT-command (result) or an application programming interface message.
The seventh processing step 407 corresponds to the second step according to the inventive method, i.e. the terminal equipment entity or functionality 21 receiving the at least one piece of emergency communication information (or at least one emergency communication-related parameter) 521.
In an eighth processing step 408, the terminal equipment entity or functionality 21 forwards the result to the application 211, especially controlling the in-vehicle system 20 (or to the user).

According to the present invention, it is possible and preferred that the mobile termination entity or functionality 23 comprises or is connected to or accesses the at least one universal integrated circuit card or functionality 24, wherein especially the at least one piece of emergency communication information or the at least one emergency communication-related parameter is stored in (or on) the universal integrated circuit card or functionality 24 of or associated to the in-vehicle system 20. At least one piece of emergency communication information or at least one emergency communication-related parameter is requested by the emergency communication request 522, and the emergency communication request 522 especially corresponds to at least one functionality out of the following:
-- querying one emergency communication-related parameter or a plurality of emergency communication-related parameters stored on the universal integrated circuit card or functionality 24:
This query of eCall-related universal integrated circuit card (or functionality)-parameters could, e.g., be conducted (or triggered) by means of the following AT-command:
"AT+ECALLUICCINFO". This is able to be used as a separate command or it is applied in a manner included or combined to other AT-commands.
The purpose of this command is that it allows the in-vehicle system 20 (or the in-vehicle system application 211) to query important parameters from the universal integrated circuit card or functionality 24, such as, e.g. the IMSI (international mobile subscriber identity), ICCID (integrated circuit card identifier information), sos-URNs (sos-uniform resource names), test-URNs (test-uniform resource names), an information regarding a callback timer, eCall retry timer inclusively a domain selector to select the domain to be used, e.g. either the circuit-switched (CS) or the IP multimedia subsystem (IMS) domain, an information regarding a test-eCall retry timer inclusively a domain selector to select the domain to be used, e.g. either the circuit-switched (CS) or the IP multimedia subsystem (IMS) domain, an information regarding whether minimum set of data (MSD) resend is enabled (or not), an information regarding whether minimum set of data (MSD) delivery is allowed and/or required via inband communication, an information regarding the fallbackemergency sos-URN to be used and the corresponding network provider information.
It is especially advantageous according to the present invention that all these parameters are able to be securely provisioned (i.e. allowing for a secure provisioning): The parameters are able to be securely provisioned via over-the-air (OTA) updates from the network provider. Especially, it is advantageously possible that the AT-command used is designed in a manner such as to authenticate and fetch these parameters safely.
For example, in this respect, the following AT-commands could be used:
"AT+ECALLUICCINFO?" could return a structured set of UICC data essential for eCall operations;
"AT+ECALLUICCINFO=eCall-URN" could return a structured set of UICC data of allowed/provisionesd eCall URNs (e.g. for the European market sos.ecall.automatic or manual) essential for eCall operations;
"AT+ECALLUICCINFO=eCall-emergency-URN" could return a structured set of UICC data of provisioned/allowed uniform resource names used for eCall emergency fallback (e.g. in the European market sos) essential for eCall operations;
"AT+ECALLUICCINFO=eCall-Test-URN" could return a structured set of UICC data of test-eCall uniform resource name(s), e.g. service.sos.test, or tel URI) essential for eCall operations;
The AT-command(s) used could also provide the possibility to include sub-commands for specific parameters, e.g., "AT+ECALLUICCINFO=IMSI".
-- triggering an emergency communication, especially an eCall, using emergency setup with category information, such as a MSISDN, one sos-uniform resource name, sos-URN, or a plurality of sos-uniform resource names, sos-URNs, or Tel-URNs as the emergency communication-related parameters provisioned by or stored on the universal integrated circuit card or functionality 24,
wherein especially triggering an emergency communication, especially an eCall, using emergency setup with category information, such as a MSISDN, one sos-uniform resource name, sos-URN, or a plurality of sos-uniform resource names, sos-URNs, or Tel-URNs as the emergency communication-related parameter(s) provisioned by or
stored on the universal integrated circuit card or functionality:
   This triggering of an emergency communication could, e.g., be conducted by means of the following AT-command: "AT+ECALLTEST"; again, this is able to be used as a separate command or it is applied in a manner included or combined to other AT-commands.

The purpose of this command is that it allows the in-vehicle system 20 to initiate a test eCall using specific URNs (e.g. service.sos.test or tel URI) to verify the in-vehicle system functionality and connectivity with emergency services without triggering actual emergency responses; optionally, a report is triggered back "successful/unsuccessful".
-- retrying an emergency communication, especially an eCall, based on or depending on timers and/or the preferred domain selection as the emergency communication-related parameters provisioned by or stored on the universal integrated circuit card or functionality 24:
   This triggering of an emergency communication could, e.g., be conducted by means of the following AT-command: "AT+ECALLRETRY"; again, this is able to be used as a separate command or it is applied in a manner included or combined to other AT-commands.
The purpose of this command is that it reinitiates an eCall subsequent to an unsuccessful eCall as fallback solution; optionally, a report is triggered back "successful/unsuccessful".
-- triggering a test emergency communication, especially a test eCall, using one uniform resource name, URN, or a plurality of uniform resource names, URNs, as the emergency communication-related parameters provisioned by or stored on the universal integrated circuit card or functionality 24:
   This triggering of a test emergency communication could, e.g., be conducted by means of the following AT-command: "AT+ECALLTEST"; again, this is able to be used as a separate command or it is applied in a manner included or combined to other AT-commands.
The purpose of this command is that it initiates a test eCall using specific URNs (e.g. service.sos.test or Tel URI) to verify the in-vehicle system functionality and connectivity with emergency services without triggering actual emergency responses; optionally, a report is triggered back "successful/unsuccessful".
-- retrying a test emergency communication, especially a test eCall, based on or depending on timers and/or preferred domain selection as the emergency communication-related parameters provisioned by or stored on the universal integrated circuit card or functionality 24:
   This triggering of a test emergency communication could, e.g., be conducted by means of the following AT-command: "AT+ECALLTESTRETRY"; again, this is able to be used as a separate command or it is applied in a manner included or combined to other AT-commands.
The purpose of this command is that it reinitiates a test eCall subsequent to an unsuccessful test eCall as fallback solution; optionally, a report is triggered back "successful/unsuccessful".
-- initiating a fallback emergency communication, especially a fallback eCall, using one uniform resource name, URN, or a plurality of uniform resource names, URNs, as the emergency communication-related parameters provisioned by or stored on the universal integrated circuit card or functionality 24, wherein the uniform resource name, URN, corresponds to a service center or to a private eCall number, or to a universal emergency number,
wherein especially the fallback emergency communication uses emergency call setup with category information, one sos-uniform resource name, sos-URN, or a plurality of sos-uniform resource names or category information, corresponds to a service center, a private call center, a test center or to an public safety answering point (PSAP):
This initiation of a fallback emergency communication could, e.g., be conducted by means of the following AT-command: "AT+ECALLFALLBACK"; again, this is able to be used as a separate command or it is applied in a manner included or combined to other AT-commands.
The purpose of this command is that it initiates a fallback voice-only emergency call if the data transmission for eCall fails; optionally, a report is triggered back "successful/unsuccessful"; this command is advantageously able to be implemented by means of a configuration such as to automatically dial the universal emergency number (e.g., 112 or 911) if the transmission of minimum set of data-information (MSD-information) is unsuccessful; especially, this command includes a logic to retry the data call a specified number of times before conducting such a fallback mechanism, i.e. falling back to voice.
-- selecting either in-band signaling of a minimum set of data-information or out-of-band signaling of a minimum set of data-information based on or depending on emergency communication-related parameters provisioned by or stored on the universal integrated circuit card or functionality 24:
   This selection of in-band/out-of-band signaling of a minimum set of data-information could, e.g., be conducted by means of the following AT-command:
   "AT+ECALLMSDMODE"; again, this is able to be used as a separate command or it is applied in a manner included or combined to other AT-commands.
The purpose of this command is that it allows the selection between in-band and out-of-band signaling methods for transmitting the minimum set of data; this command is advantageously able to be implemented by means of, e.g.,
"AT+ECALLMSDMODE=<mode>" which would take parameters to specify the signaling method (e.g. "0" (i.e. "AT+ECALLMSDMODE=0") for in-band, "AT+ECALLMSDMODE=1" for out-of-band); e.g. the command is able to be issued before an eCall to ensure the appropriate method according to network capabilities and vehicle configuration is set.

Furthermore, it is preferred according to the present invention that the at least one action is requested, in the first step, by the terminal equipment entity or functionality 21 and by means of the emergency communication request 522, wherein the emergency communication request 522 corresponds to reporting back an information regarding the success and/or the failure of minimum set of data-information transmission:
This reporting back of an information regarding the success and/or the failure of minimum set of data-information transmission could, e.g., be conducted by means of the following AT-command: "AT+ECALLMSDSTATUS"; again, this is able to be used as a separate command or it is applied in a manner included or combined to other AT-commands.
The purpose of this command is that, by means of this command, feedback on the success or failure of MSD delivery to emergency services is able to be provided; this command is advantageously able to be implemented by means of returning the status of the last transmission attempt of minimum set of data, indicating success or detailing failure reasons; especially, the command is able to indicate to provide and/or the response is able to comprise response codes to specify issues such as network failures, data corruption, or timeout errors, etc.

Hence, according to the present invention, it is advantageously possible to provide a method for configuring or profiling emergency communication - especially eCalls and test-eCalls - especially by means of data stored in the in-vehicle system, especially via USIM, by means of applying AT-commands (or commands or messages of an application programming interface) by application layer of the in-vehicle system 20.

## Claims

1. Method for conducting an emergency communication and/or for configuring an emergency communication, the emergency communication using an in-vehicle system (20) in a country, or a geographic region within a country, that is part of the coverage area of a mobile communication network (100),
wherein the in-vehicle system (20) comprises a terminal equipment entity or functionality (21) as well as a mobile termination entity or functionality (23), wherein, regarding conducting and/or configuring emergency communication, at least one piece of emergency communication information or at least one emergency communication-related parameter is stored in the in-vehicle system (20) and/or at least one action is requested, by the terminal equipment entity or functionality (21), from the mobile termination entity or functionality (23),
wherein the method comprises the following steps:
-- in a first step, the terminal equipment entity or functionality (21) requests the at least one piece of emergency communication information or the at least one emergency communication-related parameter and/or requests at least one action by means of an emergency communication request (522),
-- in a second step, the terminal equipment entity or functionality (21) receives the at least one piece of emergency communication information or the at least one emergency communication-related parameter and/or the mobile termination entity or functionality (23) conducts the at least one requested action.

2. Method according to claim 1, wherein the in-vehicle system (20) comprises, besides the terminal equipment entity or functionality (21) and the mobile termination entity or functionality (23), a terminal adaptor entity or functionality (22), wherein the terminal adaptor entity or functionality (22) receives, during or after the first step, the emergency communication request (522),
wherein especially the terminal adaptor entity or functionality (22) transmits, during or prior to the second step, an emergency communication response (521) to the terminal equipment entity or functionality (21).

3. Method according to one of the preceding claims, wherein the mobile termination entity or functionality (23) comprises or is connected to or accesses at least one universal integrated circuit card or functionality (24), wherein the at least one piece of emergency communication information or the at least one emergency communication-related parameter is stored in the universal integrated circuit card or functionality (24) of or associated to the in-vehicle system (20), wherein at least one piece of emergency communication information or the at least one emergency communication-related parameter is requested by the emergency communication request (522), wherein the emergency communication request (522) especially corresponds to at least one functionality out of the following:
-- querying one emergency communication-related parameter or a plurality of emergency communication-related parameters stored on the universal integrated circuit card or functionality (24),
-- triggering an emergency communication, especially an eCall, using one sos-uniform resource name, sos-URN, or a plurality of sos-uniform resource names, sos-URNs, as the emergency communication-related parameter(s) provisioned by or stored on the universal integrated circuit card or functionality (24),
wherein especially triggering an emergency communication, especially an eCall, using emergency setup with category information, such as a MSISDN, one sos-uniform resource name, sos-URN, or a plurality of sos-uniform resource names, sos-URNs, or Tel-URNs as the emergency communication-related parameter(s) provisioned by or stored on the universal integrated circuit card or functionality,
-- retrying an emergency communication, especially an eCall, based on or depending on timers and/or the preferred domain selection as the emergency communication-related parameter(s) provisioned by or stored on the universal integrated circuit card or functionality (24),
-- triggering a test emergency communication, especially a test eCall, using one uniform resource name, URN, or a plurality of uniform resource names, URNs, as the emergency communication-related parameter(s) provisioned by or stored on the universal integrated circuit card or functionality (24),
-- retrying a test emergency communication, especially a test eCall, based on or depending on timers and/or preferred domain selection as the emergency communication-related parameter(s) provisioned by or stored on the universal integrated circuit card or functionality (24),
-- initiating a fallback emergency communication, especially a fallback eCall, using one uniform resource name, URN, or a plurality of uniform resource names, URNs, as the emergency communication-related parameter(s) provisioned by or stored on the universal integrated circuit card or functionality (24), wherein the uniform resource name, URN, corresponds to a service center or to a private eCall number, to a private call center, to a test center or to a public safety answering point (PSAP),
wherein especially the fallback emergency communication uses emergency call setup with category information, one sos-uniform resource name, sos-URN, or a plurality of sos-uniform resource names or category information, corresponds to a service center, a private call center, a test center or to an public safety answering point (PSAP);
-- selecting either inband signalling of a minimum set of data-information or outband signaling (e.g. IP multimedia subsystem (IMS) or SIP signaling) of a minimum set of data-information based on or depending on emergency communication-related parameter(s) provisioned by or stored on the universal integrated circuit card or functionality (24).

4. Method according to one of the preceding claims, wherein the universal integrated circuit card or functionality (24) comprises - regarding at least one of the functionalities being associated or triggered or caused by the emergency communication request (522) - an information, especially a one-bit-information, indicating that the respective functionality is enabled or disabled, or that the respective functionality is allowed or disallowed.

5. Method according to one of the preceding claims, wherein the at least one action is requested, in the first step, by the terminal equipment entity or functionality (21) and by means of the emergency communication request (522), wherein the emergency communication request (522) corresponds to reporting back an information regarding the success and/or the failure of minimum set of data-information transmission.

6. Method according to one of the preceding claims, wherein the terminal adaptor entity or functionality (22), transmits, during or after the first step, a further request (524) of the emergency communication-related parameter(s) to the mobile termination entity or functionality (23), and wherein the terminal adaptor entity or functionality (22) receives, during or prior to the second step, the emergency communication-related parameter(s) from the mobile termination entity or functionality (23).

7. Method according to one of the preceding claims, wherein an AT-command interface and/or an application programming interface is used between, on the one hand, the terminal equipment entity or functionality (21), and, on the other hand, the terminal adaptor entity or functionality (22) or the mobile termination entity or functionality (23).

8. Method according to one of the preceding claims, wherein the universal integrated circuit card or functionality (24) is realized as a subscriber identity module, especially comprising a secure element or part of the user equipment (20).

9. In-vehicle system (20) for conducting an emergency communication and/or for configuring an emergency communication, the emergency communication using an in-vehicle system (20) in a country, or a geographic region within a country, that is part of the coverage area of a mobile communication network (100), wherein the in-vehicle system (20) comprises a terminal equipment entity or functionality (21) as well as a mobile termination entity or functionality (23), wherein, regarding conducting and/or configuring emergency communication, at least one piece of emergency communication information or at least one emergency communication-related parameter is stored in the in-vehicle system (20) and/or at least one action is requested, by the terminal equipment entity or functionality (21), from the mobile termination entity or functionality (23),
wherein the in-vehicle system (20) is configured such that:
-- the terminal equipment entity or functionality (21) requests the at least one piece of emergency communication information or the at least one emergency communication-related parameter and/or requests at least one action by means of an emergency communication request (522),
-- the terminal equipment entity or functionality (21) receives the at least one piece of emergency communication information or the at least one emergency communication-related parameter and/or the mobile termination entity or functionality (23) conducts the at least one requested action.

10. System or mobile communication network (100) for conducting an emergency communication and/or for configuring an emergency communication, the emergency communication using an in-vehicle system (20) in a country, or a geographic region within a country, that is part of the coverage area of a mobile communication network (100),
wherein the in-vehicle system (20) comprises a terminal equipment entity or functionality (21) as well as a mobile termination entity or functionality (23),
wherein, regarding conducting and/or configuring emergency communication, at least one piece of emergency communication information or at least one emergency communication-related parameter is stored in the in-vehicle system (20) and/or at least one action is requested, by the terminal equipment entity or functionality (21), from the mobile termination entity or functionality (23),
wherein the system or mobile communication network (100) is configured such that:
-- the terminal equipment entity or functionality (21) requests the at least one piece of emergency communication information or the at least one emergency communication-related parameter and/or requests at least one action by means of an emergency communication request (522),
-- the terminal equipment entity or functionality (21) receives the at least one piece of emergency communication information or the at least one emergency communication-related parameter and/or the mobile termination entity or functionality (23) conducts the at least one requested action.

11. Program comprising a computer readable program code, which, when executed on a computer and/or on a in-vehicle system (20) and/or on a network node of a mobile communication network (100), or in part on a in-vehicle system (20) and/or in part on network node of a mobile communication network (100), causes the computer and/or the in-vehicle system (20) and/or the network node of the mobile communication network (100) to perform a method according one of claims 1 to 8.

12. Computer-readable medium comprising instructions which when executed on on a computer and/or on a in-vehicle system (20) and/or on a network node of a mobile communication network (100), or in part on a in-vehicle system (20) and/or in part on network node of a mobile communication network (100), causes the computer and/or the in-vehicle system (20) and/or the network node of the mobile communication network (100) to perform a method according one of claims 1 to .8
